# EUROPEAN PATENT APPLICATION

(11) **EP 4 583 228 A1**
(43) Date of publication of application: **09.07.2025**
(21) Application number: 24852147.8
(22) Date of filing: 26.07.2024
(51) Int. Cl.: H01M 10/0562, H01M 10/0565, H01M 10/052

(54) **SOLID ELECTROLYTE MEMBRANE AND ALL-SOLID-STATE BATTERY COMPRISING SAME**

(30) Priority: 04.08.2023 KR 20230102139; 25.07.2024 KR 20240098513
(71) Applicant: LG Energy Solution, Ltd., Seoul 07335 (KR)
(72) Inventor: KIM, Yun Kyoung, Daejeon 34122 (KR); KIM, Donghyeon, Daejeon 34122 (KR); LEE, Jieun, Daejeon 34122 (KR)
(74) Representative: Goddar, Heinz J.
(86) International application number: PCT/KR2024/010939
(87) International publication number: WO 2025/033791

(57) **Abstract**

The present invention relates to a solid electrolyte film and an all-solid-state battery comprising same.

## Description

### [Technical Field]

This application claims the benefit of priority to Korean Patent Application No. 10-2023-0102139, filed August 4, 2023, and Korean Patent Application No. 10-2024-0098513, filed July 25, 2024, the disclosures of which are incorporated herein by reference in their entirety.

The present invention relates to a solid electrolyte film and an all-solid-state battery comprising same.

### [Related Art]

A secondary battery is a device that converts external electrical energy into chemical energy, stores it, and generates electricity when needed. It is also called a rechargeable battery because it can be recharged multiple times. Common secondary batteries include lead-acid batteries, nickel-cadmium batteries (NiCd), nickel-metal hydride batteries (NiMH), and lithium secondary batteries. Secondary batteries offer both economic and environmental benefits over primary batteries, which are used once and discarded.

On the other hand, as wireless communication technology becomes increasingly advanced, the demand for lightweight, thin, and miniaturized portable devices and automotive accessories is increasing, and the demand for secondary batteries as energy sources for these devices is growing. In particular, as hybrid and electric vehicles become more practical in terms of preventing environmental pollution, research is emerging to use secondary batteries in these next-generation automotive batteries to reduce manufacturing costs and weight while extending their lifespan. Among the various secondary batteries, lithium secondary batteries have recently been in the spotlight due to their light weight, high energy density and operating potential, and long cycle life.

Generally, lithium secondary batteries are manufactured by mounting an electrode assembly consisting of a negative electrode, a positive electrode, and a separator inside a cylindrical or angular metal can, or a pouch-like case of aluminum laminated sheet, and injecting an electrolyte into the electrode assembly.

However, lithium secondary batteries require a cylindrical, angular, or pouch-like case with a certain amount of space, which limits the development of various types of portable devices. Therefore, a new type of lithium secondary battery that is easy to shape is needed. In particular, as an electrolyte for lithium secondary batteries, an electrolyte with excellent ionic conductivity and no leakage is required.

Traditionally, the liquid electrolyte in which lithium salts are dissolved in non-aqueous organic solvents has been used for lithium secondary batteries. However, this liquid electrolyte is not only prone to electrode material degradation and volatilization of organic solvents, but also to combustion or explosion due to the increase in ambient temperature and the temperature of the battery itself, and to leakage, making it difficult to realize various types of highly safe lithium secondary batteries.

On the other hand, all-solid-state batteries utilizing a solid electrolyte have the advantage of eliminating organic solvents, which allows for safe and simple electrode assemblies.

However, all-solid-state batteries have limitations since their actual energy density and power output do not match those of lithium secondary batteries using conventional liquid electrolytes. All-solid-state batteries are bulky and heavy compared to conventional lithium secondary batteries due to the presence of an electrolyte film containing a solid electrolyte between the positive electrode and negative electrode, resulting in lower energy density per volume and energy density per weight. Thinning the electrolyte film to prevent this can cause a short circuit between the positive electrode and negative electrode.

However, there are limitations in current limited slurry solvent and binder technologies. In other words, conventionally, solid electrolyte films are manufactured by applying NBR-based polymers as binders to secure flexibility and obtain free-standing films, but the low ionic conductivity reduces the characteristics of the battery.

Solid electrolyte films for all-solid-state batteries are highly dependent on the properties of the binder material, from the dispersibility of the electrolyte particles to the manufacturability of the solid electrolyte film or the charging and discharging characteristics of the battery. Therefore, it is necessary to develop a solid electrolyte film for all-solid-state batteries that not only has excellent ionic conductivity but also flexibility.

### [Prior Art Reference]

### [Patent Reference]

(Patent reference 1) Korean Patent Laid-open Publication No. 10-2021-0082575

### [Detailed Description of the Invention]

### [Technical Problem]

In order to solve the above problem, the inventors of the present invention conducted various studies and confirmed that a solid electrolyte film with improved ionic conductivity and flexibility can be prepared by adjusting the content of acrylic binder and nitrile butadiene rubber (NBR) binder as a binder, and completed the present invention.

Accordingly, the present invention aims to provide a solid electrolyte film for all-solid-state batteries with excellent ionic conductivity and flexibility.

It is also an object of the present invention to provide an all-solid-state battery comprising the solid electrolyte film.

### [Technical Solution]

In one aspect of the present invention, a solid electrolyte film for all-solid-state batteries comprises a solid electrolyte and a binder, wherein the binder comprises an acrylate-based binder and an NBR-based binder.

In one aspect of the present invention, the solid electrolyte film for all-solid-state batteries may comprise an acrylate-based binder in an amount of at least 25% by weight and less than 75% by weight based on the total weight of the binder.

In one aspect of the present invention, the solid electrolyte film for all-solid-state batteries may comprise an NBR-based binder in an amount of 75% by weight or less and greater than 25% by weight based on the total weight of the binder.

In one aspect of the present invention, in the solid electrolyte film for all-solid-state batteries, the acrylate-based binder may be an alkyl acrylate-based binder.

In one aspect of the present invention, the solid electrolyte film for all-solid-state batteries may comprise an acrylate monomer, wherein the alkyl acrylate-based binder is selected from the group consisting of alkyl (meth)acrylate, alkyl acrylate, hydroxyl alkylacrylate, epoxy (meth)acrylate, and combinations thereof.

In one aspect of the present invention, the solid electrolyte film for all-solid-state batteries may comprise at least one of a sulfide-based solid electrolyte, a polymer-based solid electrolyte, and an oxide-based solid electrolyte.

In one aspect of the present invention, the solid electrolyte film for all-solid-state batteries may have a thickness of 10 µm to 200 µm.

In one aspect of the present invention, the solid electrolyte film for all-solid-state batteries may be a free-standing film.

In one aspect of the present invention, the solid electrolyte film for all-solid-state batteries may have an ionic conductivity of 1.0 mS/cm to 10 mS/cm.

In one aspect of the present invention, an all-solid-state battery comprises a positive electrode, a negative electrode, and a solid electrolyte film interposed therebetween, wherein the solid electrolyte film is a solid electrolyte film according to the present invention.

### [Advantageous Effects]

The solid electrolyte film for all-solid-state batteries of the present invention includes an acrylate-based binder and a nitrile butadiene rubber-based binder as a binder, and can exhibit excellent effects of ionic conductivity and flexibility by adjusting the content of the binders.

### [Brief Description of Drawing]

FIGs. 1a and 1b are drawings illustrating the flexibility of a solid electrolyte film according to examples of the present invention.
FIGs. 2a to 2f are drawings illustrating the flexibility of a solid electrolyte film according to comparative examples of the present invention.

### [Best Mode]

Hereinafter, the invention will be described in more detail.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

The terminology used in the present invention is used to describe certain examples only and is not intended to limit the invention. Expressions in the singular include the plural unless the context clearly indicates otherwise. In the present invention, the terms "comprising" or "having" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

While lithium secondary batteries have been used in small applications such as cell phones and laptops, they have recently expanded into medium and large applications such as electric vehicles and energy storage. In this case, unlike the smaller ones, the operating environment is harsher and more batteries need to be used, so they need to have stability with good performance.

Currently, most commercially available lithium secondary batteries use liquid electrolytes in which lithium salts are dissolved in organic solvents, and the organic solvents contained in the liquid electrolyte are volatile and flammable, posing a potential risk of ignition and explosion, and leakage can occur, resulting in a lack of long-term reliability.

In response, the development of all-solid-state batteries, which replace the liquid electrolyte in lithium secondary batteries with a solid electrolyte, is underway. Since all-solid-state batteries do not contain volatile organic solvents, there is no risk of explosion or fire, and they are gaining traction as a way to manufacture high-powered batteries with excellent economics and productivity.

The manufacturing of thin solid electrolyte film is essential to realize the high energy density of all-solid-state batteries. The solid electrolyte film is prepared by applying a slurry comprising a solid electrolyte in the form of particles and a binder onto a release film, drying it, and removing the release film, and depending on the nature of the binder, the dispersibility of the solid electrolyte, the manufacturability of the solid electrolyte film, and even the charging and discharging characteristics of the all-solid-state battery can be different.

Accordingly, the present invention seeks to provide a solid electrolyte film for all-solid-state batteries that has excellent ionic conductivity by minimizing ionic conductivity degradation and has excellent flexibility to facilitate the manufacture of all-solid-state batteries.

Hereinafter, the composition and effectiveness of the present invention will be described in detail.

In one example of the present invention, a solid electrolyte film for all-solid-state batteries includes a solid electrolyte and a binder, wherein the binder may include an acrylate-based binder and an NBR-based binder.

The solid electrolyte may comprise at least one selected from the group consisting of a sulfide-based solid electrolyte, a polymer-based solid electrolyte, and an oxide-based solid electrolyte, preferably a sulfide-based solid electrolyte. The solid electrolyte may be in the form of particles.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite type solid electrolytes. Furthermore, the sulfide-based solid electrolyte may be doped with trace elements, for example, Li₆PS₅Cl additionally doped with bromine (Br).

The polymeric solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

In the electrolyte of the present invention, the lithium salt is an ionizable lithium salt, which can be expressed as Li⁺X⁻. The anions of these lithium salts are not specifically limited, but may include, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

The binder may include an acrylate-based binder and a nitrile butadiene rubber-based (NBR) binder.

As used herein, an acrylate is a substance produced by the esterification reaction of acrylic acid with an alcohol, and may include, for example, methyl acrylate, ethyl acrylate, and the like.

In one example, an acrylate-based binder of the present invention may include an alkyl acrylate monomer, such as alkyl (meth)acrylate, alkyl acrylate, or hydroxy alkylacrylate. Further, the acrylate-based binder may be prepared by mixing the monomers. In one example, the acrylate-based binder may be prepared by mixing butyl acrylate and ethyl acrylate, but is not limited to these examples.

In addition, according to one example, the acrylate-based binder of the present invention may include two or more acrylate monomers, such as polyester acrylate.

In addition, according to one example, the acrylate-based binder of the present invention may include alkyl (meth)acrylate monomers and epoxy (meth)acrylate monomers such as glycidyl (meth)acrylate.

As used herein, nitrile butadiene rubber (NBR) refers to a binder comprising a copolymer of acrylonitrile and butadiene.

The NBR-based binders used in the present invention may be those known in the art.

In one example of the present invention, the content of the acrylate-based binder may be at least 25% by weight and less than 75% by weight based on the total weight of the binder. More specifically, the content of the acrylate-based binder may be 25% by weight or more, 30% by weight or more, 35% by weight or more, 40% by weight or more, 45% by weight or more, or 50% by weight or more, or less than 75% by weight, 70% by weight or less, 65% by weight or less, 60% by weight or less, 55% by weight or less, or 50% by weight or less, based on the total weight of the binder.

When the content of the acrylate-based binder is less than 25% by weight, there is a problem that the ionic conductivity of the solid electrolyte film is rapidly reduced, and when the content of the acrylate-based binder is 75% by weight or more, there is a problem that the flexibility of the solid electrolyte film is significantly reduced due to the relatively small content of the NBR-based binder.

In one example of the present invention, the content of the NBR-based binder may be less than or equal to 75% by weight and greater than 25% by weight, based on the total weight of the binder. More specifically, the content of the NBR-based binder may be 75% by weight or less, 70 % by weight or less, 65% by weight or less, 60% by weight or less, 55% by weight or less, or 50% by weight or less, or greater than 25% by weight , 30% by weight or more, 35% by weight or more, 40% by weight or more, 45% by weight or more, or 50% by weight or more, based on the total weight of the binder.

When the content of the NBR-based binder is 25% by weight or less, there is a problem that the flexibility of the solid electrolyte film is significantly reduced, and when the content of the NBR-based binder is more than 75% by weight, there is a problem that the ionic conductivity of the solid electrolyte film is rapidly reduced due to a relatively small content of acrylate-based binder.

Based on the total weight of the solid electrolyte film for all-solid-state batteries, the solid electrolyte may be comprised in an amount of 95 to 99.5% by weight, and the binder may be comprised in an amount of 0.5 to 5% by weight. By including a solid electrolyte and a binder as described above, a solid electrolyte film for all-solid-state batteries can be prepared that can be maintained in the form of a film while minimizing the content of binder that acts as a resistance to ionic conductivity.

The solid electrolyte film for all-solid-state batteries may be a free-standing (also known as "self-supporting") film. The free-standing film means a film that maintains its shape without a support. The solid electrolyte film for all-solid-state batteries in the form of a free-standing film can be used in the manufacturing process of all-solid-state batteries without any external support components.

The thickness of the solid electrolyte film for all-solid-state batteries may be 10 µm to 200 µm, preferably 50 µm to 100 µm. With the above thickness, it can be applied to all-solid-state batteries and has excellent ionic conductivity and flexibility.

The ionic conductivity of the solid electrolyte film for all-solid-state batteries may be 1.0 mS/cm to 10.0 mS/cm. Specifically, the ionic conductivity of the solid electrolyte film for all-solid-state batteries may be 1.0 mS/cm or more, 1.1 mS/cm or more, 1.2 mS/cm or more, 1.3 mS/cm or more, 1.4 mS/cm or more, 1.5 mS/cm or more, 1.6 mS/cm or more, 1.7 mS/cm or more, 1.8 mS/cm or more, 1.9 mS/cm or more, 2.0 mS/cm or more, or 10.0 mS/cm or less, 9.5 mS/cm or less, 9.0 mS/cm or less, 8.5 mS/cm or less, 8.0 mS/cm or less, 7.5 mS/cm or less, 7.0 mS/cm or less, 6.5 mS/cm or less, 6.0 mS/cm or less, 5.5 mS/cm or less, 5.0 mS/cm or less, but is not limited to these examples. If the ionic conductivity of the solid electrolyte film is less than 1.0 mS/cm, the transfer of lithium-ion between the positive electrode and the negative electrode may be impaired, resulting in a decrease in battery performance.

In one example of the present invention, an all-solid-state battery includes a positive electrode, a negative electrode, and a solid electrolyte film interposed therebetween, wherein the solid electrolyte film may be the solid electrolyte film of the present invention described above.

The all-solid-state battery is a lithium secondary battery, wherein the positive electrode or the negative electrode is not limited, and it may be a lithium-air battery, a lithium-oxide battery, a lithium-sulfur battery, or a lithium metal battery.

The positive electrode may comprise a positive electrode current collector and a positive electrode active material applied to one side or both sides of the positive electrode current collector.

The positive electrode current collector is intended for the support of the positive electrode active material and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The positive electrode active material may comprise a positive electrode active material and optionally a conductive material and a binder.

The positive electrode active material may vary depending on the type of all-solid-state battery. For example, the positive electrode active material may include, but not limited to, a layered compound such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₃, V₂O₅, or Cu₂V₂O₇; Ni site-type lithium nickel compound represented by LiNi₁₋ₓMₓO₂ (wherein M is Co, Mn, Al, Cu, Fe, Mg, B or Ga; and 0.01≤x≤0.3); a lithium manganese complex oxide represented by LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; LiFePO₄; elemental sulfur (S8); a sulfur-based compound such as Li₂Sn (wherein n is 1), an organosulfur compound or a carbon-sulfur polymer ((C₂Sₓ)n, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives can be used as the conductive material. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the positive electrode may further comprise a binder, wherein the binder further increases the cohesion between the components comprised of the positive electrode, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

The negative electrode may comprise a negative electrode current collector and a negative electrode active material located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions (Li+), and any material that can react with lithium ions to reversibly form lithium-containing compounds.

For example, the negative electrode active material may include, but not limited to, one or more carbonaceous materials selected from the group consisting of crystalline artificial graphite, crystalline natural graphite, amorphous hard carbon, low crystalline soft carbon, carbon black, acetylene black, ketjen black, super-P, graphene, and fibrous carbon, Si-based materials, LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb or Ge; Me' is Al, B, P, Si; elements of Group 1, 2 or 3 of the periodic table; halogen; 0<x≤1; 1≤y≤3; and 1≤z≤8) and other metal complex oxides; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers, such as polyacetylene; Li-Co-Ni based materials; titanium oxides; and lithium titanium oxides.

The preparation of the all-solid-state battery is not particularly limited by the present invention, and known methods may be used.

For example, a solid electrolyte film is placed between the positive electrode and the negative electrode, which is then compression molded to assemble the cell. The assembled cell is installed in the outer material and sealed by heating compression or the like. Exterior materials include laminated packs of aluminum or stainless steel, and cylindrical or square metallic containers.

In one example, the electrodes of the positive electrode and negative electrode are prepared via a slurry coating process in which the electrodes are prepared in the form of a slurry composition comprising a respective electrode active material, a solvent, and a binder, coated, and then dried.

The method of coating the electrode slurry on the current collector may include a method of distributing the electrode slurry on the current collector and uniformly dispersing it using a doctor blade, die casting, comma coating, or screen printing. Alternatively, the electrode slurry can be molded on a separate substrate and then bonded to the current collector by pressing or lamination methods. The thickness of the final coating can be controlled by adjusting the concentration of the slurry solution or the number of coats.

The drying process is the removal of solvent and moisture from the slurry in order to dry the slurry coated on the metal current collector, which can vary depending on the solvent used. For example, it is performed in a vacuum oven at 50 to 200°C. Drying methods include, for example, drying by warm air, hot air, low humidity air, vacuum drying, irradiation with (far) infrared or electromagnetic radiation. The drying time is not specifically specified, but typically ranges 30 seconds to 24 hours.

After the drying process, the process may further comprise a cooling process, the cooling process may comprise slow cooling to room temperature to ensure that the recrystallized organization of the binder is well formed.

Furthermore, if necessary, to increase the capacity density of the electrode after the drying process and to increase the adhesion between the current collector and the active material, a rolling process can be performed, in which the electrode is passed between two heated rolls and compressed to the desired thickness. The rolling process is not particularly limited in the present invention, and known rolling processes can be used. For example, it is performed by passing the electrode between rotating rolls or using a flatbed press.

The shape of the all-solid-state battery is not particularly limited and can be cylindrical, stacked, coin-shaped, or otherwise.

### [Mode for Practicing the Invention]

Hereinafter, preferred examples are described for the purpose of illustrating the present invention, but it will be apparent to those skilled in the art that various changes and modifications are possible within the scope of the invention and the technical idea, and that such changes and modifications fall within the scope of the appended patent claims.

### Manufacturing a solid electrolyte film for all-solid-state batteries

### Example 1

A binder solution was prepared by dissolving the binder polymer in an isobutyl isobutyrate solvent, and then a slurry was prepared by adding argyrodite (Li₆PS₅Cl) as a solid electrolyte, the binder solution and isobutyl isobutyrate as an additional solvent into a container, and mixing them.

Polyethylene terephthalate (PET) was used as a release film, and the slurry was coated on the release film. After that, it was dried at room temperature for 2 hours and then dried in a vacuum oven at a temperature of 45°C for 5 hours, and the release film was removed to prepare a solid electrolyte film for all-solid-state batteries in the form of a free-standing film.

The solid electrolyte film for all-solid-state batteries comprised 98% by weight of argyrodite and 2% by weight of a binder polymer, based on the total weight of the solid electrolyte film. The binder polymer comprised 50% by weight of acrylate and 50% by weight of nitrile butadiene rubber (NBR). The acrylate binder used a mixture of 50% by weight of butyl acrylate and 50% by weight of ethyl acrylate.

In addition, the thickness of the solid electrolyte film for all-solid-state batteries was 100 µm.

### Example 2

The solid electrolyte film was prepared in the same manner as that prepared in Example 1, except that the binder polymer used 25% by weight of acrylate and 75% by weight of NBR.

### Comparative Example 1

The solid electrolyte film was prepared in the same manner as that prepared in Example 1, except that the binder polymer used 100% by weight of acrylate.

### Comparative Example 2

The solid electrolyte film was prepared in the same manner as that prepared in Example 1, except that the binder polymer used 75% by weight of acrylate and 25% by weight of NBR.

### Comparative Example 3

The solid electrolyte film was prepared in the same manner as that prepared in Example 1, except that the binder polymer used 100% by weight of NBR.

### Comparative Example 4

The solid electrolyte film was prepared in the same manner as that prepared in Example 1, except that the binder polymer used 50% by weight of NBR and 50% by weight of polyimide (PI).

### Comparative Example 5

The solid electrolyte film was prepared in the same manner as that prepared in Example 1, except that the binder polymer used 50% by weight of NBR and 50% by weight of styrene ethylene butylene styrene (SEBS).

### Comparative Example 6

The solid electrolyte film was prepared in the same manner as that prepared in Example 1, except that the binder polymer used 50% by weight of NBR and 50% by weight of cyanoacrylate (CA).

### Experimental Example 1: Measurement of ionic conductivity and flexibility

The ionic conductivity of the solid electrolyte films for all-solid-state batteries prepared in Examples 1 and 2 and Comparative Examples 1 to 6 were measured and their flexibility was confirmed.

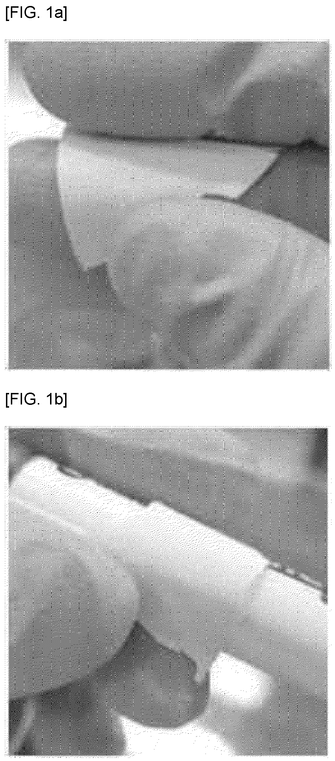

FIG. 1a is a diagram illustrating the flexibility of the solid electrolyte film for all-solid-state batteries according to Example 1, and FIG. 1b is a diagram illustrating the flexibility of the solid electrolyte film for all-solid-state batteries according to Example 2.

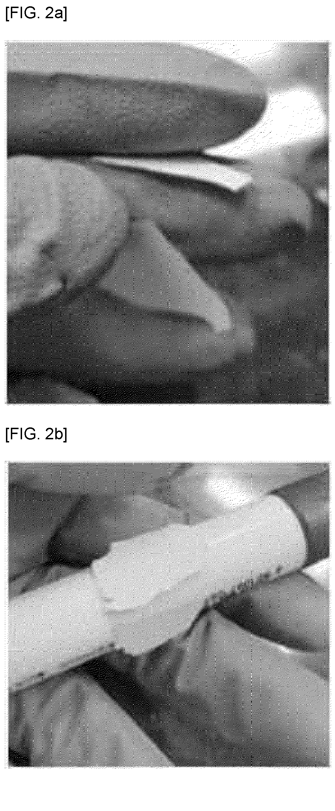

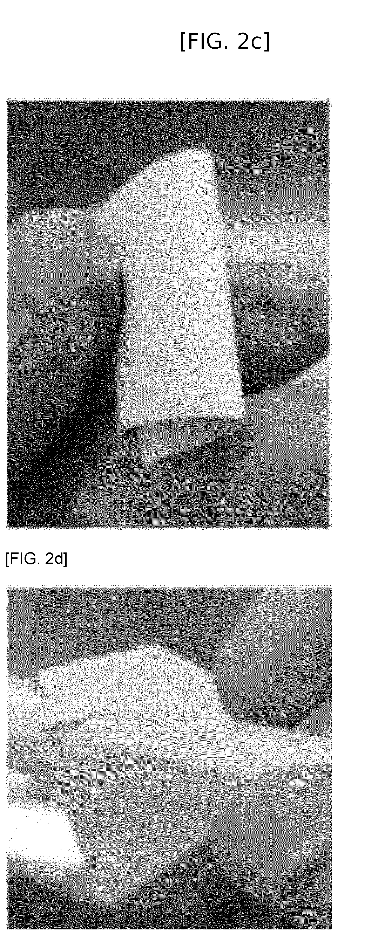

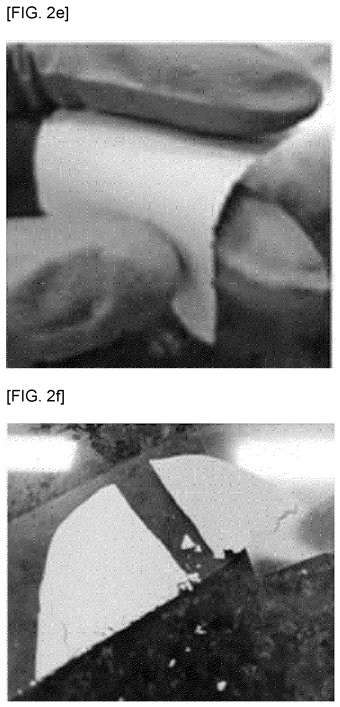

FIG. 2a is a diagram illustrating the flexibility of the solid electrolyte film for all-solid-state batteries according to Comparative Example 1, FIG. 2b is a diagram illustrating the flexibility of the solid electrolyte film for all-solid-state batteries according to Comparative Example 2, FIG. 2c is a diagram illustrating the flexibility of the solid electrolyte film for all-solid-state batteries according to Comparative Example 3, FIG. 2d is a diagram illustrating the flexibility of the solid electrolyte film for all-solid-state batteries according to Comparative Example 4, FIG. 2e is a diagram illustrating the flexibility of the solid electrolyte film for all-solid-state batteries according to Comparative Example 5, and FIG. 2f is a diagram illustrating the flexibility of the solid electrolyte film for all-solid-state batteries according to Comparative Example 6.

The ionic conductivity was measured by placing aluminum foil on the top and bottom surfaces of the solid electrolyte film for all-solid-state batteries, assembling a jig cell, and pressurizing it to 360 MPa.

Flexibility was monitored for cracking when a solid electrolyte film for all-solid-state batteries was wrapped around a mandrel with a diameter of 2 mm.

The ionic conductivity and flexibility results for solid electrolyte films are shown in Table 1 below.

**[Table 1]**

| | Binder Composition (%) | | | Ionic conductivity (mS/cm) | Flexibility |
|---|---|---|---|---|---|
| | Acrylate | NBR | Other | | |
| Example 1 | 50 | 50 | - | 1.362 | o |
| Example 2 | 25 | 75 | - | 1.188 | o |
| Comparative | 100 | 0 | - | 1.725 | Broken |
| Example 1 | | | | | |
| Comparative Example 2 | 75 | 25 | - | 1.406 | Broken |
| Comparative Example 3 | 0 | 100 | - | 0.963 | ⊚ |
| Comparative Example 4 | - | 50 | PI (50) | 1.334 | Broken |
| Comparative Example 5 | - | 50 | SEBS (50) | 0.820 | o |
| Comparative Example 6 | - | 50 | CA (50) | 1.315 | Broken |

From the results in Table 1 above, Examples 1 and 2, which include at least 25 % by weight but less than 75% by weight of acrylate and 75% by weight or less and more than 25% by weight of NBR as binder polymers, exhibited excellent ionic conductivity and, at the same time, excellent flexibility without cracking. Comparative Example 1, which includes 100% by weight of acrylate of the total weight of the binder polymer, has better ionic conductivity than Examples 1 and 2, but was found to be cracked and inflexible.

Comparative Example 2, comprising 75% by weight of acrylate and 25% by weight of NBR, relative to the total weight of the binder polymer, was found to have better ionic conductivity than Examples 1 and 2, but was not found flexible due to cracking.

Comparative Example 3 includes 100% by weight of NBR of the total weight of the binder polymer, and was found to have good flexibility but lower ionic conductivity than Examples 1 and 2.

Comparative Example 4, which includes 50% by weight of NBR and 50% by weight of poly-imide (PI) of the total weight of the binder polymer, was found to have good ionic conductivity but was found to be cracked and inflexible.

Comparative Example 5, comprising 50% by weight of NBR and 50% by weight of styrene ethylene butylene styrene (SEBS) based on the total weight of the binder polymer, was found to have good flexibility, but lower ionic conductivity than Examples 1 and 2.

Comparative Example 6, which includes 50% by weight of NBR and 50% by weight of cyanoacrylate (CA) by total weight of the binder polymer, was found to have good ionic conductivity but was found to be cracked and inflexible.

Thus, it can be seen that a solid electrolyte film for all-solid-state batteries comprising at least 25% by weight but less than 75% by weight of acrylate and 75% by weight or less and more than 25% by weight of NBR, relative to the total weight of the binder polymer, has excellent ionic conductivity and flexibility.

In addition, it can be seen that the combination of NBR and other binders besides acrylate-based binders as binder polymers leads to a decrease in the ionic conductivity of the electrolyte.

It can also be seen that solid electrolyte films for all-solid-state batteries using NBR and alkyl acrylate-based binders as binder polymers have better ionic conductivity and flexibility.

## Claims

1. A solid electrolyte film for all-solid-state batteries, comprising a solid electrolyte and a binder, wherein the binder comprises an acrylate-based binder and an NBR-based binder.

2. The solid electrolyte film for all-solid-state batteries according to claim 1,
wherein the content of the acrylate-based binder is at least 25% by weight and less than 75% by weight, based on the total weight of the binder.

3. The solid electrolyte film for all-solid-state batteries according to claim 1,
wherein the content of the NBR-based binder is 75% by weight or less and greater than 25% by weight, based on the total weight of the binder.

4. The solid electrolyte film for all-solid-state batteries according to claim 1,
wherein the acrylate-based binder is an alkyl acrylate-based binder.

5. The solid electrolyte film for all-solid-state batteries according to claim 4,
wherein the alkyl acrylate-based binder comprises an acrylate monomer selected from the group consisting of alkyl (meth)acrylate, alkyl acrylate, hydroxyl alkylacrylate, epoxy (meth)acrylate, and combinations thereof.

6. The solid electrolyte film for all-solid-state batteries according to claim 1,
wherein the solid electrolyte comprises at least one of a sulfide-based solid electrolyte, a polymer-based solid electrolyte, and an oxide-based solid electrolyte.

7. The solid electrolyte film for all-solid-state batteries according to claim 1,
wherein the film has a thickness of 10 to 200 µm.

8. The solid electrolyte film for all-solid-state batteries according to claim 1,
wherein the film is a free-standing film.

9. The solid electrolyte film for all-solid-state batteries according to claim 1,
wherein the ionic conductivity of the solid electrolyte film for all-solid-state batteries is 1.0 mS/cm to 10 mS/cm.

10. An all-solid-state battery, comprising:
a positive electrode;
a negative electrode; and
a solid electrolyte film interposed between the positive electrode and negative electrode,
wherein the solid electrolyte film is a solid electrolyte film according to any one of claims 1 to 9.
